(19) Europäisches Patentamt
European Patent Office
Office européen des brevets

(11) EP 0 599 927 B1

(12) EUROPÄISCHE PATENTSCHRIFT

(45) Veröffentlichungstag und Bekanntmachung des Hinweises auf die Patenterteilung:
**11.06.1997 Patentblatt 1997/24**

(21) Anmeldenummer: **92917606.3**

(22) Anmeldetag: **18.08.1992**

(51) Int Cl.[6]: **C05G 3/00**

(86) Internationale Anmeldenummer:
**PCT/DE92/00697**

(87) Internationale Veröffentlichungsnummer:
**WO 93/04017 (04.03.1993 Gazette 1993/06)**

# (54) VERFAHREN ZUR HERSTELLUNG VON MEMBRANUMHÜLLTEN DÜNGEMITTELGRANULATEN

PROCESS FOR THE MANUFACTURE OF MEMBRANE-COVERED FERTILIZER GRANULES

PROCEDE DE PREPARATION DE GRANULES D'ENGRAIS ENROBES D'UNE MEMBRANE

(84) Benannte Vertragsstaaten:
**AT BE CH DE DK ES FR GB GR IE IT LI LU NL SE**

(30) Priorität: **20.08.1991 DE 4127459**

(43) Veröffentlichungstag der Anmeldung:
**08.06.1994 Patentblatt 1994/23**

(73) Patentinhaber: **AGLUKON SPEZIALDÜNGER GMBH**
**D-40522 Düsseldorf (DE)**

(72) Erfinder:
- **BÜRGER, Horst**
  **D-51143 Köln (DE)**
- **JASCHKOWITZ, Michael**
  **D-40599 Tönisvorst (DE)**
- **KLOTH, Bernhard**
  **D-50823 Köln (DE)**
- **KOHL, Wilhelm**
  **D-40219 Dormagen (DE)**
- **WEGENER, Holger**
  **D-41468 Neuss (DE)**
- **WEHR, Peter**
  **D-40549 Düsseldorf (DE)**

(74) Vertreter: **Schmidt, Werner et al**
**Hoechst Schering AgrEvo GmbH,**
**Patent- und Lizenzabteilung,**
**Gebäude K 801**
**D-65926 Frankfurt am Main (DE)**

(56) Entgegenhaltungen:
**DE-A- 3 544 451**
**US-A- 3 264 089**
**US-A- 4 711 659**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 599 927 B1

**Beschreibung**

Die Erfindung betrifft ein Verfahren zur Herstellung von membranumhüllten Düngemittelgranulaten zur bedarfsgerechten Pflanzenernährung.

Eine moderne, umweltgerechte und bedarfsbezogene Pflanzenernährung stützt sich heute in steigendem Maße auf Langzeitdünger, die durch chemische Modifikation der Nährstoffe oder durch Umhüllung.löslicher Düngemittelgranulate gekennzeichnet sind.

Umhüllte Langzeitdünger werden in zahlreichen Patenten beschrieben. So werden unter anderem als Umhüllungsstoffe Harnstofformaldehydharze PE, PP, Alkydharze, Epoxidharze und in neuerer Zeit Polyurethanharze herangezogen (z.B. DE 3 544 451, US 3 264 088, GB 1 011 463, EP 0 276 179, DE 2 834 513, US 3 223 518, NL PS 129 279). Mit den genannten Systemen ist es mehr oder weniger gelungen, die Nährstofffreisetzungen zeitlich zu modifizieren, so daß Freisetzungszeiträume für kürzere oder längere Kulturzeiten realisiert werden können.

Aus der DE-A-3 544 451 ist bekannt, kömige Stoffe, wie z.B. Mineraldünger, mit einer Beschichtungsmasse zu umhüllen, die ein Polyisocyanat und eine Polyolkomponente umfaßt, und die Beschichtungsmasse mit einem Amin auszuhärten, wobei die Beschichtungsmasse auch stufenweise zu dem körnigen Stoff gegeben werden kann.

Nachteilig bei den bekannten Verfahren ist, daß Parameter für die bedarfsgerechte Pflanzenernährung, wie z. 8. Homogenität der Einzelkornbeschichtung, physikalische Belastbarkeit, Frostunempfindlichkeit, bisher nicht oder nur unvollkommen gelöst werden konnten. Vor allem ist es bisher nicht gelungen, aus speziellen Salzmischungen heraus die Einzelnährstofffreisetzung so zu steuern, daß z.B. Kalium gegenüber Stickstoff stärker verzögert freigesetzt wird.

Aufgabe der Erfindung ist es, die bekannten Nachteile zu überwinden. Es wurde nun ein wirtschaftlicher, industrieller Produktionsprozeß gefunden, der es ermöglicht, bei hinreichend hoher Homogenität der Einzelkornbeschichtung ein physikalisch belastbares, frostbeständiges Granulat zu erzeugen, aus dem die Nährstofffreisetzung gezielt verzögert im Sinn der Fick'schen Diffusionsgesetze verläuft.

Eine wesentliche Voraussetzung zur Erzielung hoher mechanischer Belastbarkeit ist die Auswahl eines hoch belastbaren Hüllmaterials, welches wenn es auf dem Düngergranulat appliziert ist, seine mechanischen Eigenschaften voll zur Geltung bringt.

Gegenstand des Erfindung ist, das Verfahren nach dem unabhängigen Anspruch 1 ; eine bevorzugte Ausführungsform ist gegenstand des abhängigen Anspruchs 2.

Als geeignet für die erfingungsgemäße Umhüllung hat sich ein lösungsmittelfreies, bei Raumtemperatur verarbeitbares Zweikomponenten-Polyurethanharzsystem, welches über Aminkatalyse in sehr kurzen Zeiten aushärtbar ist (vergleiche DE 3544 451), erwiesen.

Der erfindungsgemäße Beschichtungsprozeß wird in einer Trommel durchgeführt, die mit speziellen Einbauten versehen ist. Zum einen stellen besonders geformte Hischschaufeln die Homogenität der Mischung sicher, zum anderen führen Luftkanäle in das Granulatbett, um dieses intensiv belüften zu können. Die Reaktion erfolgt im geschlossenen System.

Die Granulate für diesen Beschichtungsprozeß müssen weitgehend rund, staubarm, abriebfest, bruchfest und die darin enthaltenen Nährstoffe weitgehend wasserlöslich sein. Ein enges Kornspektrum der Granulate ist zweckmäßig, wobei der Faktor 3 zwischen den kleinsten und den größten Granulatkörnern ausreichend ist.

In der eingangs genannten DE-A-3 544 451 wird ein Beschichtungsverfahren beschrieben, bei dem bei einer geplanten Granulatbeschichtung von 15 Gew.-% Hülle, bezogen auf das Endprodukt, die Hüllmasse aus Polyisocyanat und Polyol 3 mal in 5 % Portionen bei gleichzeitiger permanenter Katalysatorbegasung mit bei 20 °C anmingesättigtem Stickstoffgas aufgebracht wird. Das Ergebnis einer derartigen Beschichtung führt zu einer Anfangsfreisetzung von bis zu 18 % nach 24 Stunden (Beispiel 1).

Die Freisetzung von Elektrolyten aus kunststoffumhüllten Düngemitteln in einer wässerigen Lösung wird durch Messung der Leitfähigkeit bestimmt.

Hierzu werden 10,0 g der zu prüfenden Probe in 800 ml Wasser mit einer Leitfähigkeit kleiner als 0,5 µS/cm gegeben. Bei 25 °C wird das Wasser t Tage mit konstanter Drehzahl von 300 U/min gerührt. Die Veränderung des Salzgehaltes der Lösung nach Ablauf von t Tagen wird konduktometrisch bestimmt.

Zum Erstellen einer Eichkurve wird die Leitfähigkeit in Lösungen mit 0,2; 0,4; 0,6; 0,8; 1,0; 2,0; 4,0; 6,0; 8,0 und 10,0 g gelöster Probe in 800 ml Wasser Leitfähigkeit in mS/cm gemessen.

Die Abgaberate R wird dann anhand der Eichkurve bestimmt, wobei sich die mittlere Abgaberate pro Tag $R_m$ bestimmt durch $R_{t2} - R_{t1}/t2 - t1$ mit $R_{t1}$ = Abagaberate nach t1 Tagen und $R_{t2}$= Abgaberate nach t2 Tagen.

Die Grundfließcharakteristik läßt zwar eine Verzögerung der Nahrstofffreisetzung erkennen, gibt aber nicht alle Hinweise für das Vorliegen einer echten Membran. Als Indizien für eine membrangesteuerte Diffusion (Membranfunktion) sind anzusehen:

a) eine meßbare Membranaktivierungszeit und

b) die Anwendbarkeit des Fick'schen Diffusionsgesetzes gemäß folgender Differentialgleichung:

$$\frac{dmi}{dt} = - K \times \frac{1}{n(T)} \times \frac{\Delta ci(T)}{f(ri)} \times \frac{F}{D} \times T$$

| | |
|---|---|
| mi | molare Konzentration des Stoffes i |
| t | Zeit |

| | |
|---|---|
| K | Konstante: |

$$R/(6\ \pi\ N)$$

R: Gaskonstante
N: Loschmidt-Zahl

| | |
|---|---|
| n(T) | Viskosität Membran/Lösung (Stoffeigenschaft der Hülle bei guter (Ausführung) |
| Δ ci(T) | Konzentrationsgefälle des Stoffes i (Stoffeigenschaft der Kernzusnammensetzung) |
| f(ri) | Geschwindigkeitsfaktor des Teilchens i mit dem Radius r (Stoffeïgenschaft der Kernzusammensetzung) |
| F | Membranfläche (Korngrößenverteilung und Oberflächenstruktur der Granulate) |
| D | Membranstärke (aufgebrachte effektive Lackdicke) |
| T | Temperatur in ° Kelvin |

Dabei ist die Freisetzung der Nährstoffe in der Zeiteinheit nicht nur von der Gesamtmembranfläche, der Membranstärke und der Temperatur abhängig, sondern im wesentlichen auch vom Konzentrationsunterschied der einzelnen gelösten Stoffe innerhalb der umhüllten Granulate zu der die Granulate umgebenden Lösung.

Überraschend wurde nun gefunden, daß man bei einer besonderen Prozeßführung Granulate erzeugen kann, die in ihrer Freisetzungscharakteristik alle typischen Merkmale einer membranregulierten Diffusion zeigen. So wurden mit dem erfindungsgemäßen Verfahren umhüllte Granulate erhalten, die eine meßbare, charakteristische Membranaktivierungszeit aufweisen. Die daran anschließende Nährstofffreisetzung belegt ebenfalls die aktive Trennung der Wirkstoffreserve von der umgebenden Lösung.

Zur Erzeugung dieser vollständigen Membran als Diffusionsregulativ wird das aufzutragende Hüllmaterial bestehend aus Polyisocyanat und Polyol so aufgeteilt, daß Schichtdicken von 10 bis 30 µm, vorzugsweise 15 bis 25 µm, nicht überschritten werden. Das bedeutet bei einem Granulat im Kornspektrum von 2 bis 4 mm und einem Hedianwert von 3,0 mm eine aufzubringende Teilmenge von ca. 1 bis 3 %, vornehmlich kleiner gleich 2 % Masse, bezogen auf die Masse der zu beschichtenden Granulate.

Dieser Hüllmassenanteil wird nach einer definierten Verteil- und Verlaufszeit mittels eines hochkonzentrierten Aminnebels als Katalysator spontan zur Reaktion gebracht. Der hoch konzentrierte Aminnebel wird direkt aus unverdünntem Amin airless mit einem Druck von 2 bis 10 bar, vorzugsweise 3 bis 5 bar, bei einem Volumenstrom von 10 bis 30 ml/s erzeugt.

Der hochkonzentrierte Aminnebel ermöglicht es, im Gegensatz zu einer Begasung mit nur einem verdünnten Amin-Luft-Gemisch, gleichzeitig an allen Reaktionsstellen auf die gesamte aufgebrachte Hüllmasse ein so hohes Katalysatorpotential aufzubringen, daß eine gleichzeitige, spontane Aushärtung auf jedem Einzelkorn stattfindet. Dabei wird die äußerst empfindliche Gelphase, die den Übergang darstellt zwischen frei fließender Harzmischung und klebfreier Lackoberfläche, extrem schnell ohne Zerstörung der gerade auszubildenden Lackhülle durchlaufen.

Nach Erreichen der Klebfreiheit wird das Amin durch Be- und Entlüftung vor dem nächsten Hüllmassenauftrag so weit entfernt, daß eine vorzeitige Einleitung der Reaktion vor der nächsten Verteil- und Verlaufsphase unterbunden wird. Diese erfindunsgsgemäße Trennung der einzelnen Reaktionsphasen ist wesentlich für den dichten Einzelkornmembranaufbau. Ein intermediäres Aneinanderkleben einzelner Körner würde beim Trennen der Körner zu Rißbildung und somit Verletzung der bisher ausgebildeten Oberfläche führen und die Beschichtungsqualität erheblich herabsetzen.

Die Temperatur im Reaktionsbett beeinflußt sowohl Lackverteilung und -verlauf als auch die Reaktionszeit. Es wurde gefunden, daß in einem Temperaturbereich von 25 bis 50 °C, vorzugsweise im Bereich von 30 bis 40 °C Verlauf und Verteilung durch Viskositätserniedrigung ausreichend beschleunigt sind, ohne daß im gleichem Maße die Reaktionszeit verkürzt wird. Die Katalysatormenge wird unter Beibehaltung des Katalysatorpotentials der erhöhten Temperatur angepaßt, d.h. reduziert. Die Temperaturführung erfolgt durch Variation der Zulufttemperatur abhängig von der freiwerdenden Prozeßwärme.

Die Belüftung nach Eintrag des Aminnebels und entsprechender Reaktionszeit erfolgt vorzugsweise durch Einbringen von Luft direkt in das Innere des Granulatbettes. Durch den dadurch ermöglichten schnellen Gasaustausch wird das Granulatbett von Amin befreit und so für den folgenden Hüllmassenauftrag in optimaler Zeit vorbereitet.

Zur Ausbildung der angestrebten Membranstärke wird der beschriebene Beschichtungsvorgang mehrfach wiederholt. Dabei hat es sich gezeigt, daß bei einer Granulattemperatur von 30 °C zu Beginn des ersten Beschichtungsablaufs, z. B. durch Aufheizen mit Luft mit einer Zulufttemperatur von ca. 80 °C, nach dem dritten Beschichtungsauftrag die Temperatur durch Kühlung mit Zuluft von Raumtemperatur in dem optimalen Temperaturbereich von 30 bis 40 °C gehalten werden kann. Parallel dazu wird die Aminmenge gestaffelt herabgesetzt. So wird z.B. mit Dimethylisopropylamin zum ersten Beschichtungsvorgang 2 - 5 % Masse, bezogen auf applizierte Hüllmasse, aufgebracht. Diese kann dann bei den weiteren Beschichtungsschritten bis auf 0,5 % Masse verringert werden.

Ein reproduzierbarer Produktionsvorgang wird sinnvollerweise durch Prozeßkontrolle und -steuerung über eine SPS (speicherprogrammierbare Steuerung) sichergestellt.

**Beispiel 1**

Herstellung membranumhüllter Düngergranulate mit einer Nährstofffreisetzungszeit von 8 Monaten.

450 kg eines Rundgranulates NPK 16-10-20 werden in einer verschließbaren Trommel vorgelegt und durch Durchströmen von auf 80 °C vorgeheizter Luft auf eine Granulattemperatur von 30 °C aufgewärmt. Bei rotierender Trommel wird im ersten Schritt 8,8 kg einer Polyol-Polyisocyanatmischung auf das Granulat aufgetropft und ingesamt 2 min. gemischt.

Anschließend wird ohne weitere Luftzufuhr bei geschlosssener Trommel Dimethylisopropylamin airless über zwei Breitstrahldrüsen, Durchmesser 0,4 mm, mit einem Druck von etwa 4 bar und einem Volumenstrom von 18,7 ml/s appliziert. Nach 1 min. Wirkzeit wird durch Zuschalten von Zuluft und Abluft gezielt innerhalb von weiteren 4 min. die Aminkonzentration im Granulatbett unter 250 ppm gesenkt.

Die Schrittfolge Harzapplikation, Mischzeit, Aminapplikation, Wirkzeit und Belüftung wird sechsmal durchlaufen, wie aus der nachfolgenden Tabelle zu ersehen ist.

Tabelle

| Schritt | Harz | Kat. | Zuluft- | Granulat- |
|---|---|---|---|---|
| | | | Temperatur (°C) | |
| 1. | 8,8 kg | 0,24 kg | 80 | 30 |
| 2. | 8,8 kg | 0,20 kg | 80 | 33 |
| 3. | 8,8 kg | 0,18 kg | 80 | 35 |
| 4. | 8,8 kg | 0,16 kg | 80 | 38 |
| 5. | 8,8 kg | 0,14 kg | 20 | 38 |
| 6. | 8,8 kg | 0,14 kg | 20 | 36 |
| total | 52,8 kg | 1,06 kg | | |

Der Beschichtungsprozess mit den Parametern Zuluft- und Granulattemperatur sowie Katalysator-Konzentration ist nochmals in Darstellung Fig. 1 graphisch dargestellt.

Die so hergestellte Harzmembran erfüllt die Bedingungen der zuvor angegebenen Diffusionsgleichung nach Fick.

So ist vor allem eine meßbare Membranaktivierung zu beobachten, aie sich besonders bei niedrigen Temperaturen durch eine deutliche Verzögerung des Beginns der Nährstoffabgabe bemerkbar macht, wie aus der Darstellung Fig. 2 zu ersehen ist. In dieser Darstellung wird die nach dem Fick'schen Diffusionsgesetz zu erwartende Temperaturabhängigkeit der kumulativen Nährstofffreisetzung aus dem nach Beispie 1 hergestellten Granulat gezeigt.

Die Abhängigkeit der Diffusionsgeschwindigkeit von der granulatumgebenden Hüllstarke zeigt die Darstellung Fig. 3. Die in dieser Darstellung gemessenen Granulate wurden wie im Beispiel 1 mit unterschiedlichen Harzmengen hergestellt.

Die Darstellung Fig. 4 zeigt das charakteristische Auflösungsverhalten eines NPK 16-10-20-Düngers anhand der Einzelnährstofflöslichkeiten in einem geschlossenen System unter Simulation von Wassereintritt und Nährstofffabgabe, wie sie im ideal umhüllten Düngerkern zu erwarten wäre.

Die Darstellung Fig. 5 zeigt die realen Verhältnisse der Nährstofffreisetzung des nach Beispiel 1 erfindungsgemäß hergestellten Düngergranulates.

Die Veränderung des NPK-Verhältnisses im Zeitverlauf der Nährstoffabgabe des gemäß Beispiel 1 umhüllten Düngergranulats (Fig. 5) entspricht der theoretischen Erwartung (Fig. 4). Dieser analytische Befund zeigt, daß die im Innenraum des umhüllten Einzelkorns vorliegende gesättigte Lösung nach dem Membrandurchtritt in die Außenlösung zu gleichen Nährstoffverhältnissen führt.

Die Darstellung Fig. 6 zeigt im Vergleich von Einzelkornmessungen des erfindungsgemäßen Granulats A gegenüber einem Vergleichsprodukt B (0smocote$^R$, Fa. Sierra, Heerlen NL) die hohe Homogenität des Produkts aus dem erfindungsgemäßen Herstellungsprozeß (analog Beispiel 1 mit 4 Beschichtungsschritten).

In der Anwendung von umhüllten Langzeitdüngern, die zur Bevorratung von Substraten eingesetzt werden sollen, sind unter Praxisverhältnissen mechanische Einmischung, Lagerfähigkeit bereits bevorrateter Substrate generell, aber auch nicht vorhersehbare Frosteinwirkungen, wichtige kritische Faktoren.

In der Darstellung Fig. 7 ist dargelegt, wie sich das erfindungsgemäß hergestellte Granulat im Vergleich zu anderen umhüllten Produkten (0smocote$^R$, Fa. Sierra, Heerlen NL) während der Lagerung mit und ohne zeitweilige Frosteinwirkung verhält. Während das Vergleichsprodukt nach Frosteinwirkung seine Eigenschaft der verzögerten Nährstofffreisetzung vollständig verloren hat, ist diese Eigenschaft beim erfindungsgemäß hergestellten Granulat nur geringfügig beeinträchtigt.

In der Darstellung Fig. 8 ist dargelegt, wie sich das erfindungsgmäß hergestellte Granulat im Vergleich zu anderen umhüllten Produkten (Vergleichsprodukt wie oben) bezüglich ihrer mechanischen Belastbarkeit bei der Substratherstellung verhält. So wird das Nährstofffreisetzungsverhalten von erfindungsgemäß erzeugten Granulaten auch bei starkem, d.h. mehrmaligem, maschinellem Mischen nur geringfügig erhöht, wogegen das Vergleichsprodukt eine nicht akzeptable direkte Salzfreisetzung aus zerstörten Granulaten zeigt.

**Patentansprüche**

1. Verfahren zur Herstellung von membranumhüllten Düngemittelgranulaten durch schichtweises Aufbringen eines Gemisches aus Polyisocyanat und Polyol, wobei die Schichten jeweils separat mit flüssig vernebeltem Amin ausgehärtet werden, dadurch gekennzeichnet, daß das Gemisch jeweils in solchen Mengen appliziert wird, daß die einzelnen Schichten eine Schichtdicke von 10 bis 30 µm aufweisen, und daß nach jeder Schichtaushärtung die Aminkonzentration auf einen nicht katalytisch wirksamen Pegel abgesenkt wird, bevor die nächste Schicht aufgetragen wird.

2. Verfahren nach Anspruch 1, dadurch gekennzeichnet, daß das Aufbringen des Gemisches in einem Temperaturbereich von 25 bis 50°C durchgeführt wird.

**Claims**

1. A process for the manufacture of membrane-covered fertilizer granules by applying layers of a mixture of polyisocyanate and polyol, the layers each being cured separately with amine nebulized in liquid form, wherein the mixture is applied in each case in amounts such that the individual layers have a layer thickness of from 10 to 30 µm and, after the curing of each layer, the amine concentration is reduced to a level which is not catalytically active before the next layer is applied.

2. The process as claimed in claim 1, wherein the application of the mixture is carried out in a temperature range of from 25 to 50°C.

**Revendications**

1. Procédé de fabrication de granulés d'engrais enrobés d'une membrane en déposant par couches un mélange de polyisocyanate et de polyol, chaque couche étant durcie séparément au moyen d'une amine liquide pulvérisée, caractérisé en ce que le mélange est appliqué dans des quantités telles que chaque couche a une épaisseur de 10 à 30 µm et en ce que, après le durcissement de chaque couche, la concentration de l'amine est abaissée à un niveau catalytiquement inactif avant le dépôt de la couche suivante.

2. Procédé selon la revendication 1, caractérisé en ce que le dépôt du mélange se fait dans une plage de température de 25 à 50°C.

Fig. 1

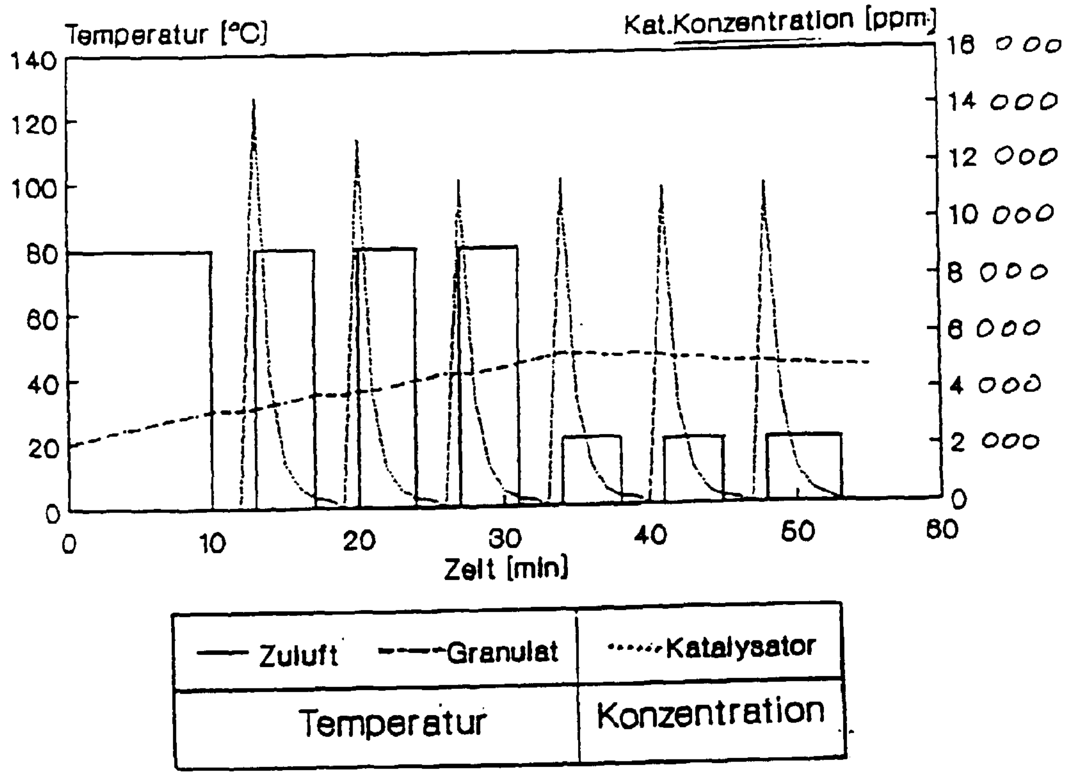

Temperatur [°C]
Kat.Konzentration [ppm]
140
120
100
80
60
40
20
0
16 000
14 000
12 000
10 000
8 000
6 000
4 000
2 000
0
0
10
20
30
40
50
60
Zeit [min]
Zuluft
Granulat
Katalysator
Temperatur
Konzentration


Fig. 2

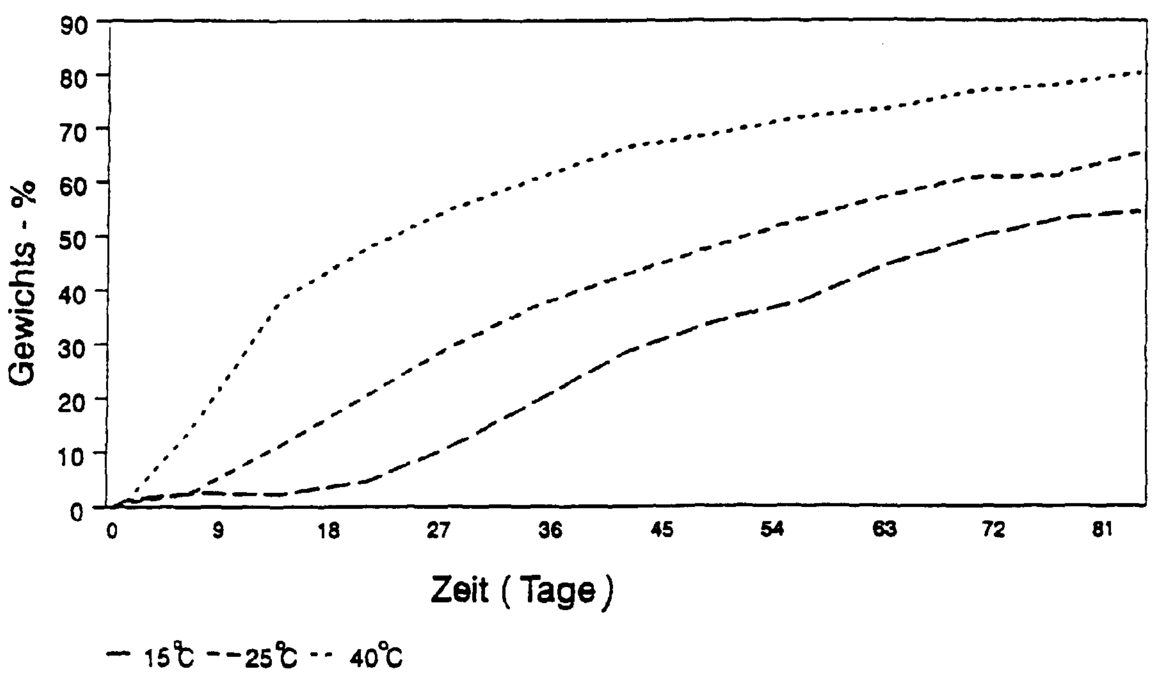

90
80
70
60
50
40
30
20
10
0
Gewichts - %
0
9
18
27
36
45
54
63
72
81
Zeit ( Tage )
15°C
25°C
40°C

Fig. 3

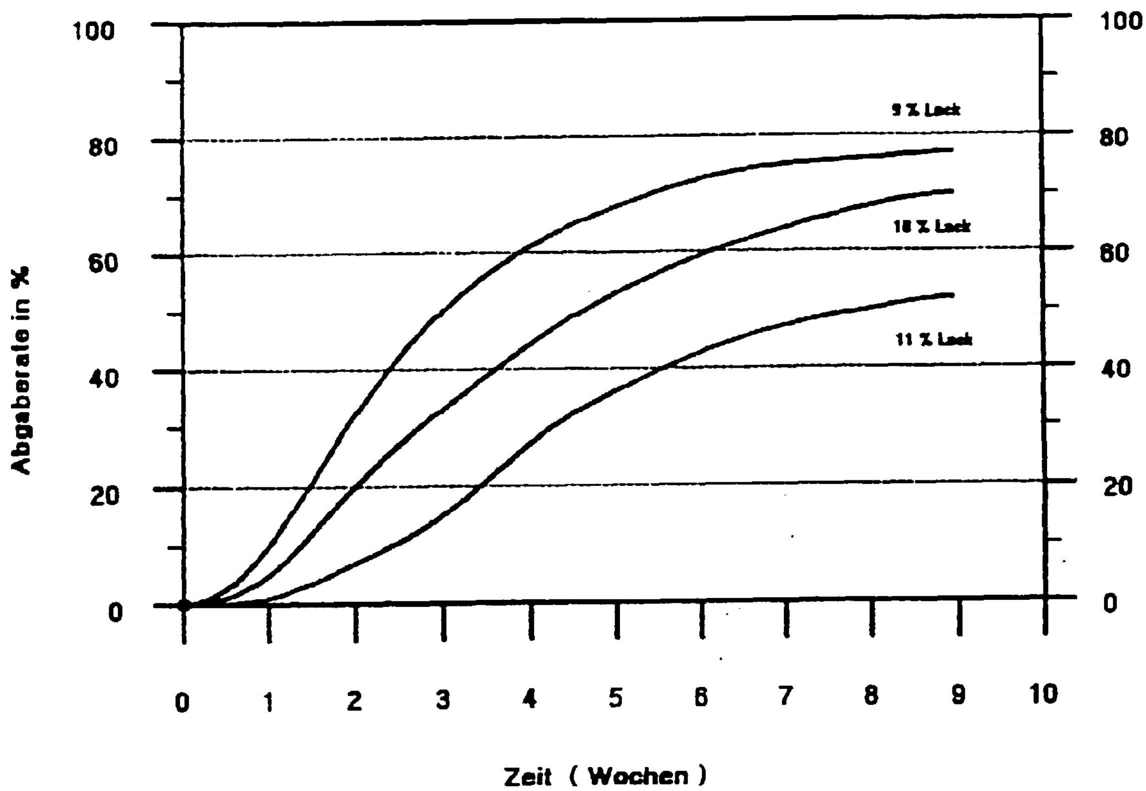
9 % Lack
10 % Lack
11 % Lack
Abgaberate in %
0
20
40
60
80
100
0
1
2
3
4
5
6
7
8
9
10
Zeit ( Wochen )

Fig. 4

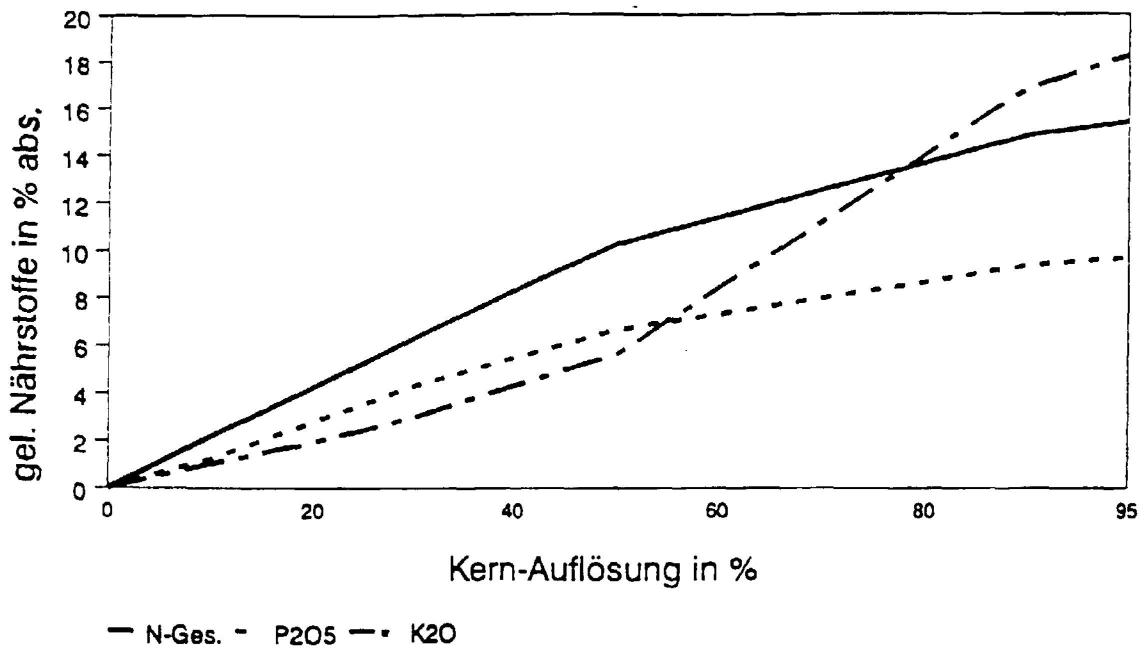
gel. Nährstoffe in % abs.
20
18
16
14
12
10
8
6
4
2
0
0
20
40
60
80
95
Kern-Auflösung in %
N-Ges.
P2O5
K2O

Fig. 5

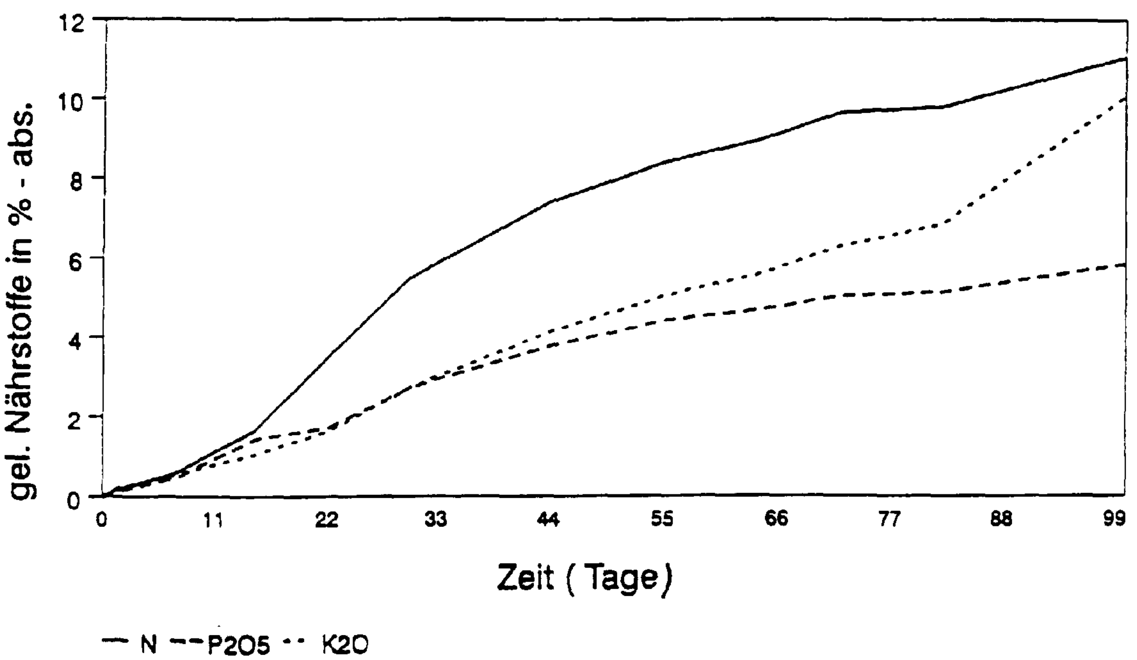
gel. Nährstoffe in % - abs.
12
10
8
6
4
2
0
0
11
22
33
44
55
66
77
88
99
Zeit ( Tage)
N
P2O5
K2O

Fig. 6

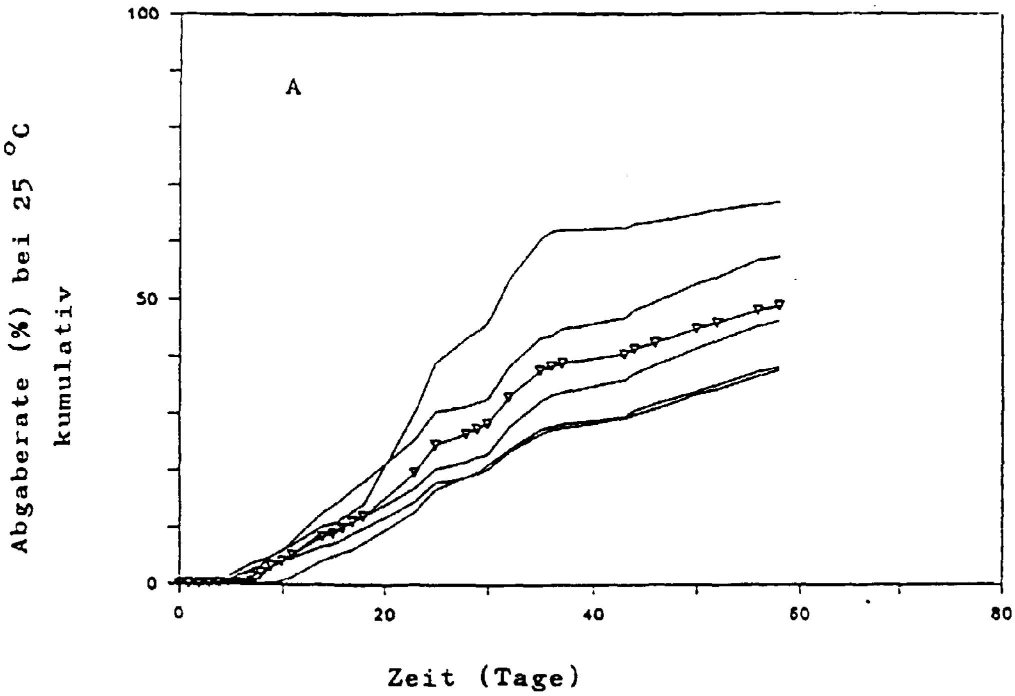


▽ ▽ Mittelwerte

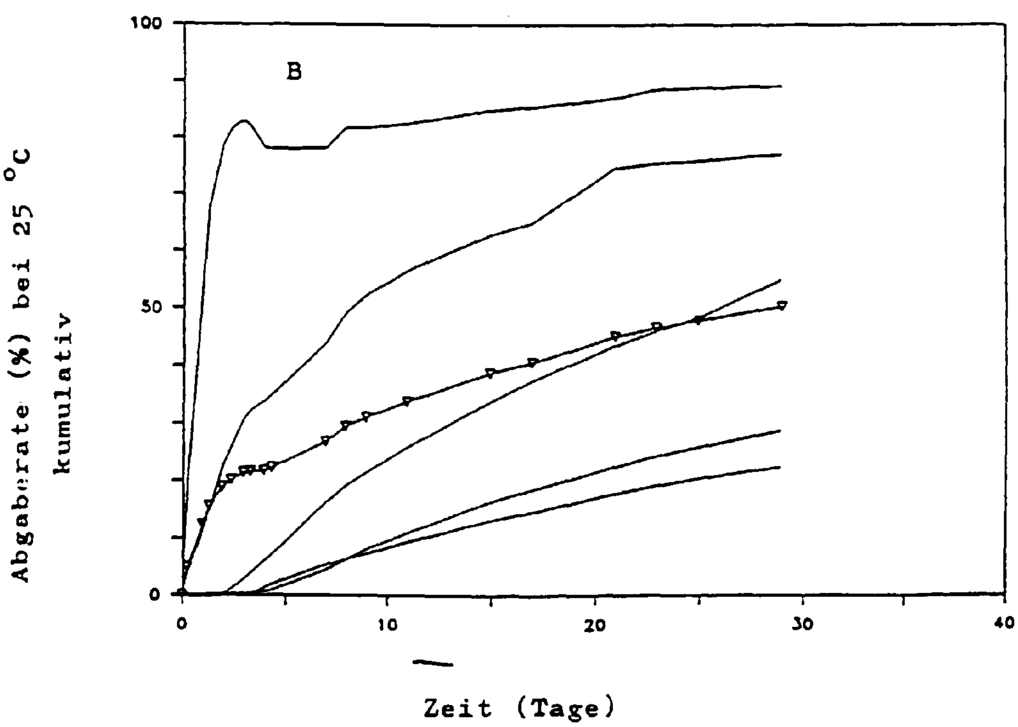

Fig. 7

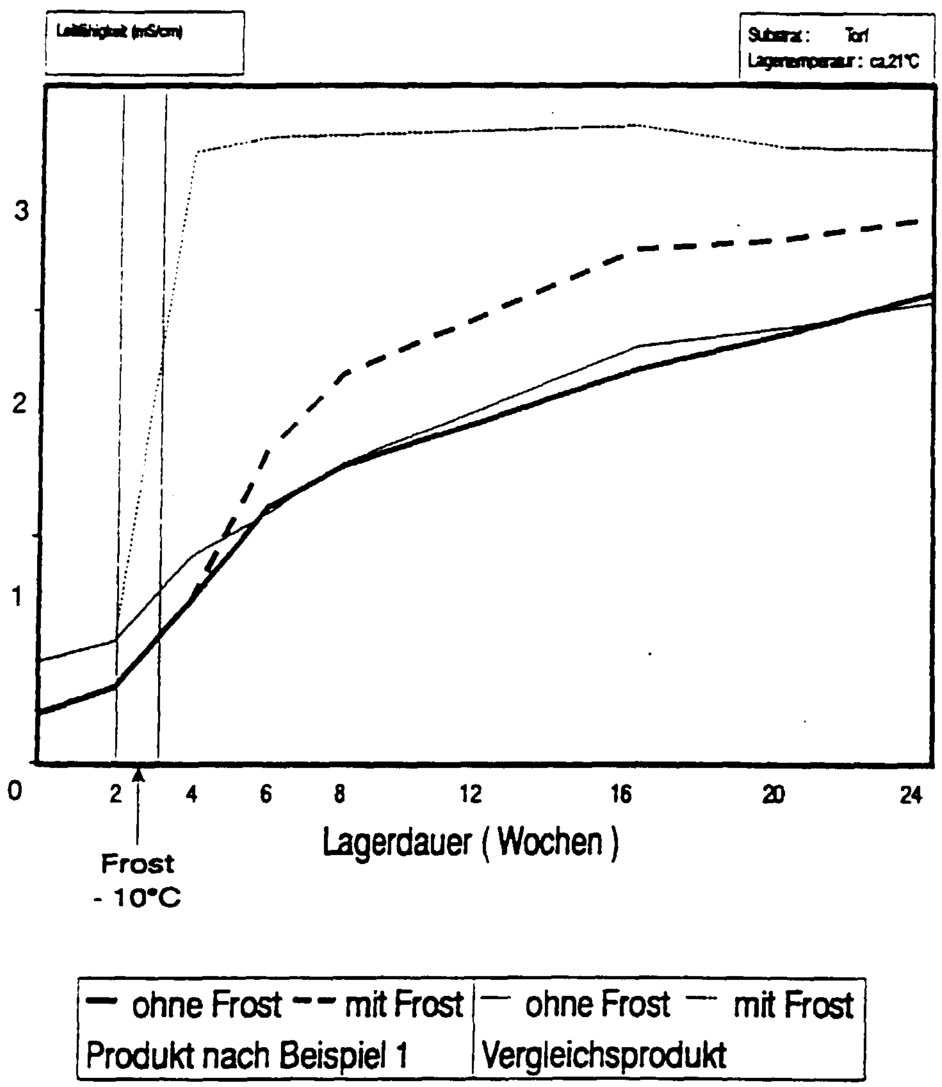
3
2
1
0
2
4
6
8
12
16
20
24
Lagerdauer ( Wochen )
Frost
- 10°C
ohne Frost
mit Frost
Produkt nach Beispiel 1
ohne Frost
mit Frost
Vergleichsprodukt

Fig. 8

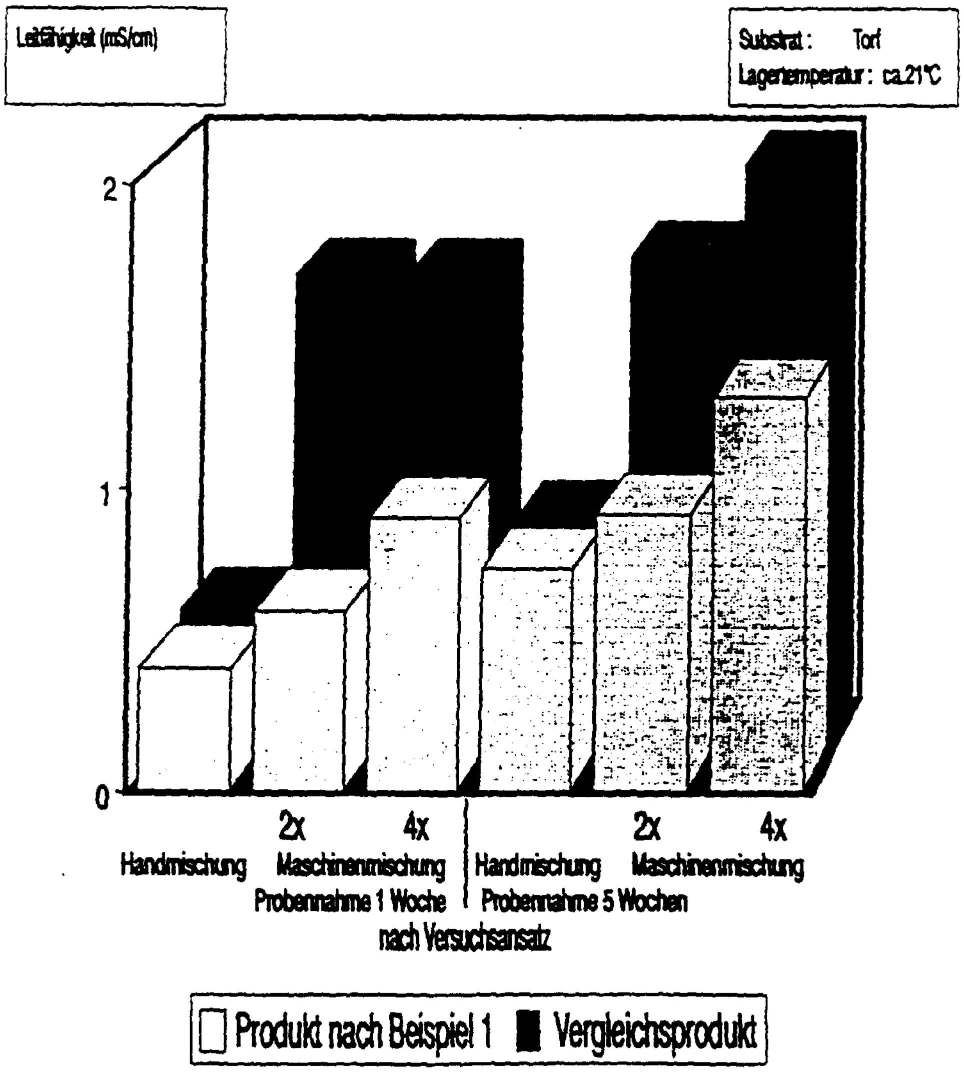
Leitfähigkeit (mS/cm)
Substrat: Torf
Lagertemperatur: ca.21°C
2
1
0
2x
4x
Handmischung
Maschinenmischung
Probennahme 1 Woche
Handmischung
2x
4x
Maschinenmischung
Probennahme 5 Wochen
nach Versuchsansatz
Produkt nach Beispiel 1
Vergleichsprodukt